# EUROPEAN PATENT APPLICATION

(11) **EP 4 822 638 A1**
(43) Date of publication of application: **14.10.2026**
(21) Application number: 25168888.3
(22) Date of filing: 07.04.2025
(51) Int. Cl.: G06T 7/00

(54) **MEDICAL IMAGE QUALITY ASSESSMENT**

(71) Applicant: Koninklijke Philips N.V., 5656 AE Eindhoven (NL)
(72) Inventor: SAALBACH, Axel, Eindhoven (NL); GRASS, Michael, Eindhoven (NL)
(74) Representative: Philips Intellectual Property & Standards

(57) **Abstract**

The subject-matter of the present disclosure relates to a computer implemented method for determining a quality of a medical image, comprising: applying a first image processing (101) to the medical image (100) to obtain a first output (103), comprising at least one of: inputting the medical image to a first machine learning model, and applying a first transformation to the medical image and inputting the first transformed image to the first machine learning model; applying a second image processing (102) to the medical image to obtain a second output (104), comprising at least one of: inputting the medical image or the first transformed image to a second machine learning model, and applying a second transformation to the medical image and inputting the second transformed image to the first machine learning model; and determining an image quality measure (105) based on a variability of the first output and the second output.

## Description

### FIELD

The subject-matter of the present disclosure relates to a computer implemented method for determining a quality of a medical image.

### BACKGROUND

In medical imaging, it is important to ensure that images are of a sufficient (i.e., high) quality, therefore assessment of image quality can be important. Imaging problems leading to lower image quality can have various sources, such as technical problems inherent to the imaging system, operator failures, or patient-related issues (e.g., non-compliance with instructions). Any such imaging problems can impact (e.g., reduce) the image quality. If the images are not of a sufficient quality, this can impact the use of the images. In some cases, if an image is of an insufficient quality, erroneous diagnoses can be made, or repeated imaging may be required.

The image quality is typically assessed during image acquisition. For example, the image quality can be assessed by the operator of the imaging system, or appropriately trained other personnel. Manually assessing image quality is a time-consuming and labor-intensive process.

Automatic image quality assessment using a machine learning algorithm, e.g., a supervised machine learning algorithm, is more efficient. Supervised machine learning algorithms require labelled images. However, since assessing a quality of an image is a subjective process, labelling images to represent the quality of the image is challenging. For example, subtle image defects, such as those due to motion, pose a particularly challenging problem. The perceived severity of the defect is often subjective, and so the collection of large, accurately labelled sets of images for the training of a machine leaning algorithm (e.g., a Deep Learning (DL)-based algorithm) is difficult. Therefore, the automated assessment or quantification of image quality remains an issue.

It is an aim of the subject-matter of the present disclosure to improve on the prior art.

### SUMMARY

According to a first aspect of the present invention, there is provided a computer implemented method for determining a quality of a medical image, comprising: applying a first image processing to the medical image to obtain a first output, wherein the first image processing comprises at least one of: inputting the medical image to a first machine learning model, and applying a first transformation to the medical image to obtain a first transformed image and inputting the first transformed image to the first machine learning model; applying a second image processing to the medical image to obtain a second output, wherein the second image processing comprises at least one of: inputting the medical image or the first transformed image to a second machine learning model, wherein the second machine learning model is different to the first machine learning model, and applying a second transformation to the medical image to obtain a second transformed image and inputting the second transformed image to the first machine learning model; determining an image quality measure based on a variability of the first output and the second output; and controlling an electronic apparatus to output the image quality measure.

In an example, the method further comprises applying a third image processing comprising at least one of: inputting the medical image or the first transformed image to a third machine learning model, wherein the third machine learning algorithm is different to the first machine learning algorithm, and applying a third transformation to the medical image to obtain a third transformed image and inputting the third transformed image to the first machine learning model.

In an example, the medical image comprises one of a computed tomography image, a magnetic resonance image, an X-ray image, a positron emission tomography scan image and an ultrasound image.

In an example, the first machine learning model is trained using training data for a specific medical function.

In an example, the first output and the second output both comprise one of: a modified image, a numerical result and a text result. Moreover, the first and second output may comprise semantic information, size information, bounding boxes, and the like.

In an example, the first machine learning model and the second machine learning model are deep-learning models.

In an example, the first image processing and the second image processing comprise at least one of: segmentation, classification, regression, registration and detection.

In an example, at least one of the first transformation and the second transformation comprises at least one of: a rotation, a translation, a noise addition, a scaling, an intensity shift, a distortion, and a random effect, such as a drop-out layer.

In an example, compared to the first machine learning model, the second machine learning model comprises at least one of: parameters trained with a different set of training data, different random seeds, different architectures, and different loss functions.

In an example, the image quality measure is based on image segments.

In an example, the image quality measure is based on the medical image as a whole.

In an example, determining the image quality measure comprises determining an image quality per segment, and determining a weighted sum of the image quality per segment.

These and other aspects of the present invention will be apparent from and elucidated with reference to the embodiment(s) described hereinafter.

### BRIEF DESCRIPTION OF DRAWINGS

The embodiments of the present inventions may be best understood with reference to the accompanying Figures, in which:
Fig. 1 shows a method for determining a quality of a medical image;
Fig. 2 shows a process of generating an image quality measure using image transformations;
Fig. 3 shows a process of generating an image quality measure using different machine learning models;
Fig. 4 shows a process of generating an image quality measure for a set of cardiac CT scan data; and
Fig. 5 shows a process of generating an image quality measure using image transformations.

### DESCRIPTION OF EMBODIMENTS

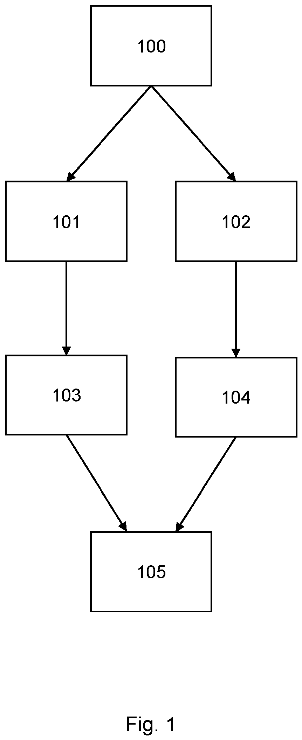

With reference to Fig. 1, there is shown a computer implemented method for determining a quality of a medical image 100. The method comprises applying a first image processing 101 to the medical image 100 to obtain a first output 103, applying a second image processing 102 to the medical image 100 to obtain a second output 104, and determining an image quality measure 105 based on a variability of the first output 103 and the second output 104. This image quality measure 105 is output by an electronic apparatus.

Herein, the term medical image 100 may be taken to mean an image obtained by an imaging apparatus that is suitable for medical imaging. For example, the medical image 100 can be obtained by a computed tomography (CT) scan, an X-ray scan, a magnetic resonance imaging (MRI) scan, a positron emission tomography (PET) scan or an ultrasound scan.

The quality of an image may relate to the entire image or a part thereof, and may depend on various factors, such as the number, extent and severity of any defects in the image or part thereof, respectively. The image quality measure 105 describes the quality of the image and may be text indicating the image quality, e.g., indicating a high, medium or low quality, or may be a numerical value

Applying the first image processing 101 to the medical image 100 comprises at least one of: inputting the medical image 100 to a first machine learning model, and applying a first transformation to the medical image 100 to obtain a first transformed image and inputting the first transformed image to the first machine learning model.

In other words, in one example, the first image processing 101 comprises inputting the medical image 100 to the first machine learning model. In this case, the first output 103 comprises the output from inputting the medical image 100 to the first machine learning model.

In another example, the first image processing 101 comprises applying the first transformation to the medical image 100 to obtain the first transformed image and inputting the first transformed image to the first machine learning model. In this case, the first output 103 comprises the output from inputting the first transformed image to the first machine learning model.

In a further example, the first image processing 101 comprises inputting the medical image 100 to the first machine learning model, and also applying the first transformation to the medical image 100 to obtain the first transformed image and inputting the first transformed image to the first machine learning model. In this case, the first output 103 comprises the output from inputting the medical image 100 to the first machine learning model and the output from inputting the first transformed image to the first machine learning model.

In some examples, the first machine learning model is a known machine learning model for image analysis and processing. In some examples, the first machine learning model includes at least one of a segmentation, a classification, a regression, a registration and a detection aspect. For classification and regression machine learning models, the output is typically one or more numerical values. For segmentation machine learning models, the output is typically a labelled image. For registration machine learning models, the output is typically a mapped image. For object detection learning models, the output is typically a bounding box. Therefore, the first output 103 depends on the first machine learning model used. In some examples, the first output 103 comprises one of: a modified image, a numerical result and a text result.

Advantageously, the first machine learning model is tailored towards the object of the medical image 100; for example, if the medical image 100 is an image of a heart, then the first machine learning model may be a cardiac segmentation model. In this way the first machine learning model corresponds to the purpose of the medical image 100. In effect, this means that the first machine learning model is trained using training data for a specific medical function. In some examples, the first machine learning model is a deep-learning model.

In some examples, the first transformation comprises at least one of a rotation, a translation, a noise addition, a scaling, an intensity shift, a distortion, and a random effect, such as a drop-out layer. These transformations can be random transformations, such that they are not necessarily predetermined. In some examples, the first transformation is a geometric transformation.

Advantageously, the first transformation does not substantially change the entire image, i.e., the first transformation is a relatively minor or small transformation.

Applying the second image processing 102 to the medical image 100 comprises at least one of: inputting the medical image 100 or the first transformed image to a second machine learning model, wherein the second machine learning model is different to the first machine learning model, and applying a second transformation to the medical image 100 to obtain a second transformed image and inputting the second transformed image to the first machine learning model.

In other words, in an example, the second image processing 102 comprises inputting the medical image 100 to a second machine learning model, wherein the second machine learning model is different to the first machine learning model. In this case, the second output 104 comprises the output from inputting the medical image 100 to the second machine learning model.

In another example, the second image processing 102 comprises inputting the first transformed image to a second machine learning model, wherein the second machine learning model is different to the first machine learning model. In this case, the second output 104 comprises the output from inputting the medical image 100 to the second machine learning model.

In another example, the second image processing 102 comprises applying a second transformation to the medical image 100 to obtain a second transformed image and inputting the second transformed image to the first machine learning model. In this case, the second output 104 comprises the output from inputting the second transformed image to the second machine learning model.

In a further example, the second image processing 102 comprises inputting the medical image 100 or the first transformed image to a second machine learning model, wherein the second machine learning model is different to the first machine learning model, and applying a second transformation to the medical image 100 to obtain a second transformed image and inputting the second transformed image to the first machine learning model. In this case, the second output 104 comprises the output from inputting the medical image 100 to the second machine learning model and the output from inputting the second transformed image to the first machine learning model.

In some examples, the second machine learning model is a known machine learning model for image analysis and processing. In some examples, the second machine learning model includes at least one of a segmentation, a classification, a regression, a registration and a detection aspect. Therefore, the second output 104 depends on the second machine learning model used. In some examples, the second output 104 comprises one of: a modified image, a numerical result and a text result.

Like the first machine learning model, the second machine learning model may be tailored towards the object of the medical image 100; for example, if the medical image 100 is an image of a heart, then the second machine learning model may be a cardiac segmentation model.

In some examples, the second image processing 102 comprises inputting the medical image 100 to the second machine learning model, which is different to the first machine learning model. In these examples, it is important to ensure that the second output 104 is comparable to the first output 103. This can be done by ensuring that there is at least some similarity between the first and second machine learning models. For example, in some examples, compared to the first machine learning model, the second machine learning model comprises at least one of: parameters trained with a different set of training data, different random seeds, different architectures, and different loss functions.

In some examples, the second transformation comprises at least one of a rotation, a translation, a noise addition, a scaling, an intensity shift, a distortion, and a random effect, such as a drop-out layer. These transformations can be random transformations, such that they are not necessarily predetermined. In some examples, the second transformation is a geometric transformation.

Advantageously, the second transformation does not substantially change the entire image, i.e., the second transformation may be considered a relatively minor or small transformation.

Applying the first image processing 101 to the medical image 100 to obtain the first output 103 and the applying the second image processing 102 to the medical image 100 to obtain the second output 104 covers various examples.

In a first example, the medical image 100 is not transformed in the first or second image processing 102, and the first and second machine learning models are different. In effect, the medical image 100 is input to the first machine learning model, and input to the second machine learning model, wherein the second machine learning model is different to the first machine learning model.

In a second example, the medical image 100 is only transformed in the second image processing 102, and the first and second machine learning models are the same. In effect, the medical image 100 is input to the first machine learning model, and the medical image 100 is transformed to obtain the second transformed image, which is input to the first machine learning model.

In a third example, the medical image 100 is transformed in the first image processing 101, and the first and second machine learning models are different. In effect, the medical image 100 is transformed to obtain the first transformed image, the first transformed image is input to the first machine learning model and the second machine learning model, wherein the second machine learning model is different to the first machine learning model.

In a fourth example, the medical image 100 is transformed in the first image processing 101 and in the second image processing 102, and the first and second machine learning models are the same. In effect, the medical image 100 is transformed by the first transformation to obtain the first transformed image which is input to the first machine learning model, and the medical image 100 is transformed by the second transformation to obtain the second transformed image which is input to the first machine learning model.

In other examples, the method includes combinations of the above first to fourth examples.

Determining the image quality measure 105 based on the variability of the first output 103 and the second output 104 comprises a statistical analysis of the first output 103 and the second output 104. If the variability in the first and second outputs is high - e.g., if the difference between the first and second outputs is higher than a threshold value - then this is a strong indicator of image quality defects in the original image and therefore an indicator of a low image quality. This is because the variability of the outputs, either resulting from transformations of the image, or different machine learning models, provides information about the quality of the input data, i.e., the medical images. That is, for high quality data, it is unlikely that minor transformations will change the outputs, contrary to low quality data. Therefore, this can be said to provide an indirect quality assessment of the data using image qualification machine learning models. In some examples, determining the image quality measure 105 comprises determining the difference between the first output 103 and the second output 104. As an example, if the first and second outputs are probabilities that a specific image feature is present in the image, then the mean probability and the variance is determined. The lower the variance, the higher the associated image quality measure 105. Alternatively, the variance may be used as the image quality measure 105 itself, in which case, a variance below a threshold value indicates a higher quality image.

The image quality measure 105 is output by an electronic apparatus. In some examples, this is as a continuous image quality score, e.g., with a higher score indicating better image quality. The image quality measure 105 helps to ensure that the image quality is sufficient for the purpose for which the medical image 100 was acquired.

Suitably, if the image quality measure 105 is above a preset threshold, then the electronic apparatus outputs an indication that the image quality is acceptable. Otherwise, the electronic apparatus outputs an indication that the image quality is unacceptable. In other examples, if the image quality measure 105 is below a preset threshold, then the electronic apparatus outputs an indication that the image quality is acceptable. Otherwise, the electronic apparatus outputs an indication that the image quality is unacceptable.

In some examples, if the image quality measure 105 indicates that the medical image 100 is not of a suitable quality, i.e., if the image quality measure 105 is below a threshold, then the imaging apparatus that obtained the medical image 100 can be adjusted for subsequent imaging. The adjustment could include changing a setting of the imaging apparatus, e.g., changing the scan time. The image quality measure 105 can be output at the point of use, i.e., by the imaging apparatus and/or to the operator.

The image quality measure 105 can also be used to assess the image quality of an operator, imaging apparatus or department to assess and adjust the imaging procedures in place.

In the above examples, the image quality measure 105 is based on the medical image 100 as a whole. However, in other examples, the image quality measure 105 is based on image segments. In this case, determining the image quality measure 105 comprises determining an image quality per segment, and determining a weighted sum of the image quality per segment.

Using segmentations, the image quality can be assessed on a pixel or voxel level. Therefore, the image quality measure 105 per segment can be used to represent localized errors. The weighted sum of the image quality measure 105 per segment can be used to determine an overall image quality measure 105. In some examples, an optimum overall image quality measure 105 is not necessarily needed. For example, when there are regions of greater importance for the purpose of the medical image 100, the image quality measure 105 associated with that region, or the segments comprising that region, is of greater importance than the overall image quality measure 105. Therefore, in determining whether an image quality is acceptable, a weighting may be applied to the regions of greater importance.

In some examples, the method further comprises applying a third image processing comprising at least one of: inputting the medical image 100 or the first transformed image to a third machine learning model, wherein the third machine learning algorithm is different to the first machine learning algorithm, and applying a third transformation to the medical image 100 to obtain a third transformed image and inputting the third transformed image to the first machine learning model. In effect, the second image processing 102, as described herein, is repeated for a different, i.e., third, machine learning algorithm and/or a different, i.e., third, transformation. Unnecessary repetition of the description of the second image processing 102 has been omitted.

In some examples, the method further comprises repeating the second and/or third image processing, as described herein, a plurality of times for different machine learning algorithms and/or different transformations. Unnecessary repetition of the description of the second and/or third image processing has been omitted.

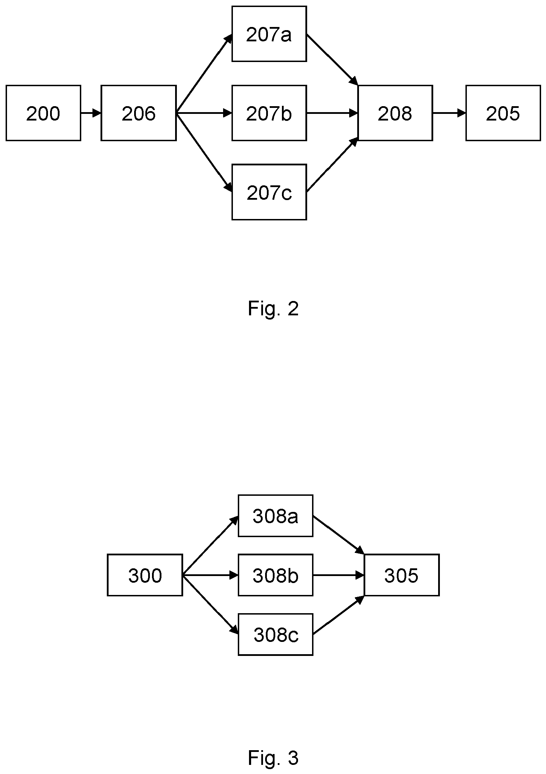

With reference to Fig. 2, there is shown a process of generating an image quality measure using image transformations. In the example of Fig. 2, the medical image or images 200 are input into a transformation module 206 to produce first, second and third transformed images 207a, 207b, 207c. The transformations may include a small rotation, a small translation, noise addition, scaling, and the like. These transformed images are input into a first machine learning model 208, e.g., a classification model. The output(s) of the first machine learning model are used to produce an image quality measure 205. The image quality measure 205 is determined from a statistical analysis of the results. For example, the mean classification probability and the variance thereof can be used to determine the image quality measure 205, such that a variance below a threshold value indicates a high image quality.

With reference to Fig. 3, there is shown a process of generating an image quality measure using different machine learning models. In the example of Fig. 3, the medical image or images 300 are input into a first, second and third machine learning models 308a, 308b, 308c, e.g., classification models. The different machine learning models may be trained on slightly different training data, may be trained with different random seeds, may be trained on different architectures, may be trained with different loss functions, and the like. The outputs of the machine learning models 308a, 308b, 308c are used to produce an image quality measure 305. The image quality measure 305 is determined from a statistical analysis of the results. For example, the mean classification probability and the variance thereof can be used to determine the image quality measure 305, such that a variance below a threshold value indicates a high image quality.

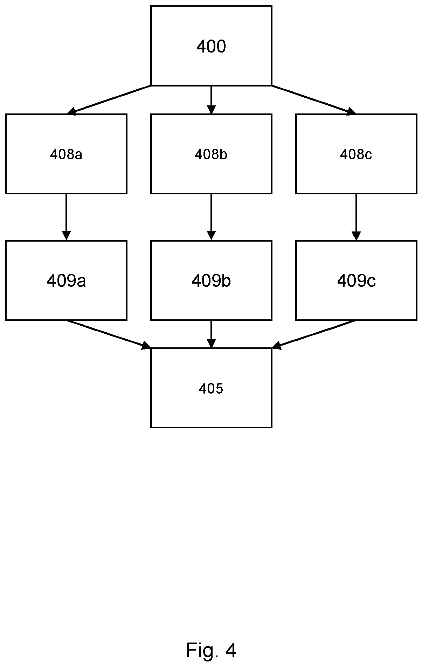

With reference to Fig. 4, there is shown a process of generating an image quality measure for a set of cardiac CT scan data. In the example of Fig. 4, the cardiac CT data set 400 is input into a cardiac segmentation machine learning model 408a, a coronary segmentation machine learning model 408b, and a plaque detection machine learning model 408c. The cardiac CT data set 400 may also be input into other suitable machine learning models, such as a fractional flow reserve calculation machine learning model. In this example, the machine learning models 408a, 408b, 408c output an uncertainty associated 409a, 409b, 409c with the machine learning model, e.g., the cardiac segmentation machine learning model 408a outputs an uncertainty 409a associated with the cardiac segmentation that the model has determined. These uncertainties can be used to determine an image quality measure 405. For example, if all uncertainties are relatively high, then the image quality is relatively low.

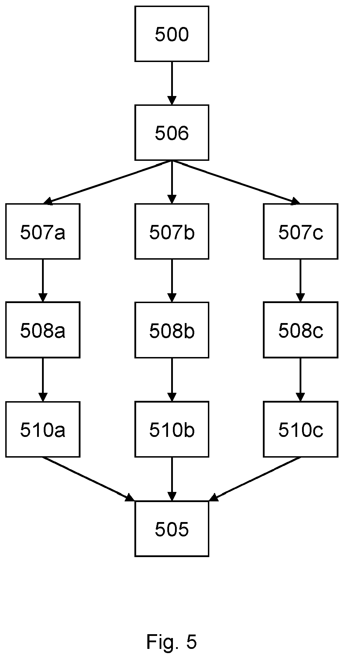

With reference to Fig. 5, there is shown a process of generating an image quality measure using image transformations and different machine learning models. In the example of Fig. 5, the medical image or images 500 are input into a transformation module 506 to produce first, second and third transformed images 507a, 507b, 507c. The transformations may include a small rotation, a small translation, noise addition, scaling, and the like. The first transformed image 507a is input into a first machine learning model 508a. The second transformed image 507b is input into a second machine learning model 508b. The third transformed image 507c is input into a third machine learning model 508c. The outputs of the machine learning models are input into inverse transformation modules 510a, 510b, 510c, which are configured to carry out the respective inverse transformations. The outputs of the inverse transformation modules 510a, 510b, 510c are used to produce an image quality measure 505.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A computer implemented method for determining a quality of a medical image (100), comprising:
applying a first image processing (101) to the medical image to obtain a first output (103), wherein the first image processing comprises at least one of:
inputting the medical image to a first machine learning model, and
applying a first transformation to the medical image to obtain a first transformed image and inputting the first transformed image to the first machine learning model;
applying a second image processing (102) to the medical image to obtain a second output (104), wherein the second image processing comprises at least one of:
inputting the medical image or the first transformed image to a second machine learning model, wherein the second machine learning model is different to the first machine learning model, and
applying a second transformation to the medical image to obtain a second transformed image and inputting the second transformed image to the first machine learning model;
determining an image quality measure (105) based on a variability of the first output and the second output; and
controlling an electronic apparatus to output the image quality measure.

2. The computer implemented method of claim 1, further comprising applying a third image processing comprising at least one of:
inputting the medical image or the first transformed image to a third machine learning model, wherein the third machine learning algorithm is different to the first machine learning algorithm, and
applying a third transformation to the medical image to obtain a third transformed image and inputting the third transformed image to the first machine learning model.

3. The method of any preceding claim, wherein the medical image comprises one of a computed tomography image, a magnetic resonance image, an X-ray image, a positron emission tomography scan image and an ultrasound image.

4. The method of any preceding claim, wherein the first machine learning model is trained using training data for a specific medical function.

5. The method of any preceding claim, wherein the first output and the second output both comprise one of: a modified image, a numerical result and a text result.

6. The method of any preceding claim, wherein the first machine learning model and the second machine learning model are deep-learning models.

7. The method of any preceding claim, wherein the first image processing and the second image processing comprise at least one of: segmentation, classification, regression, registration and detection.

8. The method of any preceding claim, wherein at least one of the first transformation and the second transformation comprises at least one of: a rotation, a translation, a noise addition, a scaling, an intensity shift, a distortion, and a random effect, such as a drop-out layer.

9. The method of any preceding claim wherein, compared to the first machine learning model, the second machine learning model comprises at least one of:
parameters trained with a different set of training data,
different random seeds,
different architectures, and
different loss functions.

10. The method of any preceding claim, wherein the image quality measure is based on image segments.

11. The method of any one of claims 1 to 9, wherein the image quality measure is based on the medical image as a whole.

12. The computer implemented method of claim 11, wherein determining the image quality measure comprises determining an image quality per segment, and determining a weighted sum of the image quality per segment.
